# EUROPÄISCHE PATENTSCHRIFT

(11) **EP 2 216 548 B1**
(45) Veröffentlichungstag und Bekanntmachung des Hinweises auf die Patenterteilung: **14.10.2015**
(21) Anmeldenummer: 10000313.6
(22) Anmeldetag: 14.01.2010
(51) Int. Cl.: F03D 11/00, F03D 7/04

(54) **Parametrisierung von Windenergieanlagen**
Parametrization of a wind turbine
Paramétrisation d'une éolienne

(30) Priorität: 05.02.2009 DE 102009007623
(43) Veröffentlichungstag der Anmeldung: 11.08.2010
(73) Patentinhaber: Senvion GmbH, 22297 Hamburg (DE)
(72) Erfinder: Altemark, Jens, 24768 Rendsburg (DE)
(74) Vertreter: Glawe, Delfs, Moll

(56) Entgegenhaltungen:
- WO-A1-2004/063568
- WO-A2-2008/119354
- US-A1- 2007 159 346

## Beschreibung

Die Erfindung betrifft eine Windenergieanlage mit automatisierter Parametrisierung. Weiterhin betrifft die Erfindung ein Verfahren zur Parametrisierung von Windenergieanlagen.

Eine Windenergieanlage besteht üblicherweise aus einer Vielzahl einzelner technischer Komponenten, die zum Betrieb der Windenergieanlage notwendig sind. Die Variabilität bei der Auswahl der Komponenten ist sehr hoch, so dass sich Windenergieanlagen in ihrer Betriebsweise in der Regel voneinander unterscheiden. Dabei kann der Unterschied in kleinen Abweichungen aufgrund von unterschiedlichen technischen Eigenschaften einzelner Komponenten oder bspw. im Vorhandensein bzw. Fehlen einer zusätzlichen Komponente liegen.

Veränderungen der Betriebsweise einer Windenergieanlage können auch dann auftreten, wenn aufgrund von Schäden oder dem Erreichen des Endes der Lebensdauer einzelner Komponenten diese ausgetauscht werden müssen. Die "neuen" Komponenten weisen in der Regel andere Eigenschaften auf als die "alten" Komponenten. So können bspw. neue Lager andere Eigenschaften aufweisen in Bezug auf Schwingungen als alte, neue Kupplungen andere Reibbeiwerte als alte etc. Dies ist u. a. dem technischen Fortschritt geschuldet.

Damit eine Windenergieanlage mit maximalem Wirkungsgrad arbeiten kann und Schädigungen einzelner Komponenten oder der gesamten Windenergieanlage verhindert werden können, müssen bei der Steuerung der Windenergieanlage die technischen Eigenschaften der einzelnen Komponenten genau berücksichtigt werden. Erst dadurch kann sichergestellt werden, dass die einzelnen Komponenten an oder wenigstens nahe ihrem optimalen Arbeitspunkt arbeiten und insbesondere Überlastungen einzelner Komponenten vermieden werden.

Aus offenkundiger Vorbenutzung ist bekannt, bei der Montage einer Windenergieanlage oder beim Austausch einzelner Komponenten die Eigenschaften der einzelnen Komponenten manuell in einer Parameterliste einzutragen, wobei die einzelnen Parameter bei der Steuerung der Windenergieanlage berücksichtigt werden. Die Windenergieanlage wird so parametrisiert.

Indem die einzelnen Eigenschaften der Komponenten per Hand in eine Parameterliste eingetragen werden müssen, kann es zu Übertragungsfehlern kommen, die im Extremfall die Zerstörung einzelner Komponenten oder der gesamten Windenergieanlage zur Folge haben können. Je nach Anzahl der verbauten Komponenten nimmt die manuelle Parametrisierung einer Windenergieanlage außerdem sehr viel Zeit eines Spezialisten in Anspruch, was sich in hohen Kosten niederschlägt.

Alternativ ist bekannt, eine Mehrzahl vorgefertigter Parameterlisten bereitzustellen, aus der dann die für eine neu aufgestellte Windenergieanlage geeignete ausgewählt wird. Zwar können hierdurch Zeit und Kosten eingespart werden, jedoch hat das versehentliche Auswählen einer falschen Parameterliste in der Regel einen erheblichen Schaden an der Windenergieanlage zur Folge. Des Weiteren ist es bei dem Austausch einzelner Komponenten der Windenergieanlage nur schwer möglich, von den Eigenschaften der vormals verbauten Komponente abzuweichen, da die neu verbaute Komponente dann nicht mehr der vorgefertigten Parameterliste entsprechen würde.

Aus der internationalen Patentanmeldung WO 2004/063568 ist eine Windenergieanlage mit mindestens zwei Komponenten bekannt, die untereinander durch ein Datennetz verbunden sind und über dieses Datennetz Signale zu Betriebszuständen austauschen. Indem einzelne Komponenten über die Betriebszustände der anderen Komponenten informiert sind, soll ein an jeder Komponente vorhandenes Steuergerät in der Lage sein, die Komponente so zu steuern, dass die Windenergieanlage mit dem maximal erreichbaren Wirkungsgrad arbeitet. Indem sich die Steuerungseinheit jeder einzelnen Komponente lediglich an den Betriebszuständen der anderen Komponenten, an gefühlten Sensorwerten und/oder Steuersignalen orientiert, soll der Austausch einzelner Komponenten ohne Weiteres - insbesondere ohne Anpassung der Steuerungen - möglich sein. Da hierfür an jeder Komponente eine Steuereinheit vorgesehen sein muss, wird die Windenergieanlage jedoch sehr komplex und teuer. Problematisch ist auch, dass einzelne Steuergeräte bspw. bei Auftreten eines kritischen Betriebszustandes der Windenergieanlage entgegengesetzte Strategien zur Beendigung des kritischen Betriebszustandes verfolgen können oder es durch gleichzeitiges Verfolgen einer vergleichbaren Strategie zu einer Überregelung kommen kann. Des Weiteren besitzt nicht jedes Austauschteil (z. B. Reibbeläge einer Kupplung) ein eigenes Steuergerät, weshalb ein solches auch nicht bei der Steuerung berücksichtigt werden kann.

Der Erfindung liegt die Aufgabe zugrunde, ein Verfahren und eine Vorrichtung zu schaffen, die die im Stand der Technik bekannten Nachteile nicht mehr oder nur noch in geringerem Maße aufweist.

Diese Aufgabe wird gelöst durch eine Vorrichtung gemäß dem Hauptanspruch bzw. durch ein Verfahren gemäß dem nebengeordneten Anspruch.

Demnach betrifft die Erfindung eine Windenergieanlage umfassend mechanische und elektrische Komponenten sowie eine zentrale Steuerungseinheit, mit der wenigstens ein Teil der Komponenten der Windenergieanlage verbunden und durch sie angesteuert werden kann, wobei die Steuerungseinheit ein Steuerungsmodul umfasst und eine Parametrisierungseinheit vorgesehen ist, die dazu ausgebildet ist, von einer oder mehreren verbauten Komponenten Identifikationsdaten zu erhalten, aus den Identifikationsdaten Angaben über die Eigenschaften der Komponenten zu gewinnen und aus den Angaben über die Eigenschaften Parametrisierungsdaten zu erzeugen, und wobei das Steuerungsmodul dazu ausgebildet ist, die Steuerung der ansteuerbaren Komponenten an die Parametrisierungsdaten anzupassen.

Weiterhin betrifft die Erfindung ein Verfahren zur Parametrisierung einer durch eine zentrale Steuerungseinheit gesteuerten Windenergieanlage mit mechanischen und elektrischen Komponenten, umfassend die Schritte:
a) Sammeln von Identifikationsdaten einer oder mehrerer verbauter Komponenten;
b) automatisierte Gewinnung von Angaben über die Eigenschaften der Komponenten aus den Identifikationsdaten;
c) Erzeugen von Parametrisierungsdaten aus den Angaben über die Eigenschaften der Komponenten; und
d) Anpassen der Steuerung der Windenergieanlage an die Parametrisierungsdaten.

Bei den mechanischen und elektrischen Komponenten einer Windenergieanlage kann es sich insbesondere um Rotorblätter, Rotornabe, Rotorwelle, Getriebe, Generator, Umrichter, Bremse, Kühlung, Pitch-Verstellantrieb, Transformator, elektrische Schaltelemente und Azimutverstellantrieb handeln. Im Sinne dieser Anmeldung zählen jedoch auch die bauliche Struktur, bspw. der Turm der Windenergieanlage, zu den Komponenten der Windenergieanlage.

Bei den Eigenschaften der Komponenten handelt es sich insbesondere um mechanische und/oder elektrische Eigenschaften. Bei den mechanischen Eigenschaften kann es sich bspw. um das Übersetzungsverhältnis eines Getriebes, die maximale Umdrehungszahl eines Generators, die Länge der Rotorblätter oder die Höchstgeschwindigkeit eines Antriebes handeln. Zu den elektrischen Eigenschaften gehören bspw. Spannungsverhältnisse eines Transformators, Energiebedarf einer Komponente oder Totzeiten bei der Verarbeitung eines Steuersignals.

Indem die Eigenschaften der einzelnen Komponenten über die Identifikationsdaten automatisiert von der Parametrisierungseinheit gewonnen und in Form von Parametrisierungsdaten bei der Steuerung der Windenergieanlage berücksichtigt werden, ist die Steuerungseinheit sowohl bei der ersten Inbetriebnahme als auch nach dem Austausch einzelner Komponenten immer mit den aktuellen Parametrisierungsdaten versorgt. Die Steuerungseinheit kann dann die Windenergieanlage so steuern, dass ein maximaler Wirkungsgrad erreicht wird. Fehler, die bei der manuellen Eingabe der zahlreichen Parametrisierungsparameter leicht auftreten können, werden vermieden.

Da die einzelnen Komponenten durch eine Parametrisierungseinheit erfasst und durch ein Steuerungsmodul in der Steuerungseinheit angesteuert werden, steigt die Komplexität der Steuerungseinheit nicht. Lediglich die Gewinnung der Parametrisierungsdaten wird etwas komplexer. Die Steuerungseinheit kann aber wie gewohnt mit diesen Daten arbeiten.

Da nur eine zentrale Steuerungseinheit vorgesehen ist, kann verhindert werden, dass bspw. beim Auftreten eines kritischen Betriebszustandes mehrere Steuerungseinheiten unterschiedliche Strategien zur Auflösung des kritischen Betriebszustandes verfolgen. Dadurch wird eine deutliche Abnahme des Wirkungsgrades oder aber der Zerstörung einzelner Komponenten bzw. der gesamten Windenergieanlage verhindert.

Die Parametrisierungseinheit ist mit der Steuereinrichtung verbunden. Dabei ist die Steuerungseinheit, zumindest jedoch das Steuerungsmodul bevorzugt so ausgebildet, dass die Parametrisierungseinheit über die Steuerungseinheit bzw. das Steuerungsmodul mit den einzelnen Komponenten kommunizieren kann. Signale zur Kommunikation zwischen der Parametrisierungseinheit und Komponenten werden also über die Steuerungseinheit geleitet. Auch andere Kommunikationswege der Steuerungseinheit, bspw. mit einem Datenfernübertragungsnetz, können von der Parametrisierungseinheit genutzt werden. Es ist auch möglich, die Parametrisierungseinheit in Form eines Parametrisierungsmoduls innerhalb der Steuerungseinheit auszubilden.

Die Parametrisierungseinheit kann Identifikationsdaten insbesondere von den Komponenten sammeln, die auch von der Steuerungseinheit angesteuert werden. Dies kann über die bereits vorhandenen Steuerleitungen geschehen. Nur in Ausnahmefällen wird eine zusätzliche Verbindung zur Übertragung der Identifikationsdaten erforderlich sein. Besonders bevorzugt ist es aber, wenn auch von Komponenten, die von der Steuerungseinheit an sich nicht angesteuert werden können oder müssen (wie z. B. das Getriebe), ihre Identifikationsdaten von der Steuerungseinheit erfasst werden, wo sie dann bei Gewinnung der Parametrisierungsdaten berücksichtigt werden. Soll diese Übermittlung kabelgebunden geschehen, müssen hierfür ggf. zusätzliche Leitungen zu den letztgenannten Komponenten gelegt werden. Ob die Leitungen an der Parametrisierungseinheit oder an der Steuerungseinheit enden, ist unerheblich, solange die Parametrisierungseinheit die Identifikationsdaten auslesen kann. Damit bietet die Erfindung den Vorteil, dass die Parametrisierungseinheit nicht nur Identifikationsdaten von ansteuerbaren Komponenten bei der automatischen Erfassung berücksichtigen kann, sondern auch von nicht-ansteuerbaren Komponenten.

Die Identifikationsdaten der einzelnen Komponenten können in Form von elektrischen Kodierungen vorliegen. Die Kodierungen können beispielsweise in elektronischen Chips oder über Dip-Schalter, die an den jeweiligen Komponenten befestigt sind, vorgehalten werden. Die Parametrisierungseinheit ist in der Lage über bereits vorhandene Steuerleitungen, neu zu verlegende Datenleitungen oder über drahtlose Verbindungen die Identifikationsdaten aus der elektrischen Kodierung auszulesen.

Ergänzend kann vorgesehen sein, dass an den Komponenten ein Transponder befestigt ist. In diesen Transponder sind die Identifikationsdaten der jeweiligen Komponente enthalten. Über ein mit Steuereinheit verbundenes Auslesemodul können die Identifikationsdaten aus den Transpondern ausgelesen werden. Sie gelangen dann zur Parametrisierungseinheit, wo sie erfindungsgemäß verarbeitet werden können. Alternativ kann die Parametrisierungseinheit selbst ein Auslesemodul aufweisen.

Alternativ kann vorgesehen sein, dass an den Komponenten Barcodes vorgesehen sind, die Identifikationsdaten enthalten. Bei der Erstmontage einer Windenergieanlage oder bei dem späteren Austausch von einzelnen Komponenten können diese Barcodes mit einem dafür geeigneten Scanner eingelesen werden. Die Identifikationsdaten werden dann an die Parametrisierungseinheit übermittelt (z.B. drahtlos oder über eine Dockingstation). Dort werden sie bei der Erstellung der Parametrisierungsdaten berücksichtigt.

An einer Windenergieanlage können außerdem ein oder mehrere Sensoren vorgesehen sein. Mit Hilfe dieser Sensoren können einzelne Eigenschaften von Komponenten ermittelt werden. Beispielsweise ist es möglich über Sensoren an der Rotorwelle und der Getriebewelle anhand der gemessenen Umdrehungszahlen das Übersetzungsverhältnis des Getriebes zu ermitteln. Bei den Sensoren kann auf solche zurück gegriffen werden, die bereits für die Steuerung der Windenergieanlage notwendig sind und damit standardmäßig bereits vorhanden sind; es ist aber auch möglich, einzelne Sensoren extra zum Zwecke der Ermittlung von Eigenschaften einzelner Komponenten vorzusehen. Bei den Sensoren kann es sich beispielsweise um Windgeschwindigkeitssensoren, Windrichtungssensoren, Drehgeschwindigkeitssensoren, Spannungssensoren, Stromsensoren und/oder Temperatursensoren handeln.

Es ist besonders bevorzugt, wenn die durch Sensoren ermittelten Angaben über Eigenschaften der Komponenten über eine Eingabe/Ausgabe-Vorrichtung verifiziert werden. Somit kann sichergestellt werden, dass fehlerhafte Messwerte, die zu unsinnigen Angaben über die Eigenschaften einer Komponente führen, erkannt werden können, bevor diese fehlerhaften Eigenschaften der Komponente in die Parametrisierung der Windenergieanlage einfließen. Es ist selbstverständlich auch möglich, dass die Angaben der Eigenschaften von Komponenten, die nicht über Sensordaten gewonnen werden, verifiziert werden. So kann eine Fehlidentifikation ausgeschlossen werden.

Es ist auch möglich, dass die Windenergieanlage zunächst mit standardisierten Parametrisierungsdaten in Betrieb genommen wird und erst im Laufe des Betriebes genauere Eigenschaften der einzelnen Komponenten, bspw. über Sensoren, gewonnen werden. Die standardisierten Parametrisierungsdaten ermöglichen einen sicheren Betrieb der Windenergieanlage, ohne dass jedoch ein maximaler Wirkungsgrad erreicht wird. Sobald die Parametrisierungseinheit feststellt, dass eine Komponente andere Eigenschaften aufweist, als in den standardisierten Parametrisierungsdaten festgehalten, können die Parametrisierungsdaten geändert und somit der Wirkungsgrad erhöht werden. Dabei werden die Änderungen vorzugsweise über eine Eingabe/Ausgabe-Vorrichtung verifiziert.

Die Verifizierung kann über eine Eingabe/AusgabeVorrichtung erfolgen, die haptisch/visuell arbeitet. Ein Beispiel hierfür ist eine Tastatur/Bildschirm-Einheit. Alternativ ist es möglich, die Eingabe und/oder die Ausgabe akustisch zu gestalten. Es ist auch eine beliebige Kombination der genannten Ausführungsformen möglich.

Selbstverständlich müssen die vorgenannten Alternativen zum Sammeln von Identifikationsdaten der einzelnen Komponenten und/oder der Ermittlung von Eigenschaften einzelner Komponenten aufgrund von Sensordaten nicht isoliert zum Einsatz kommen. Vielmehr ist es möglich, die einzelnen Verfahren miteinander zu kombinieren, sodass beispielsweise ein Teil der Komponenten - insbesondere die ansteuerbaren Komponenten - elektrisch kodiert sind, während rein mechanische Komponenten - wie zum Beispiel der Turm - einen Transponder oder einen Barcode aufweisen kann.

Die Identifikationsdaten beinhalten vorzugsweise eine Typenkennung. Anhand dieser Typenkennung ist es möglich, aus einer Datenbank die zu dieser Typenkennung passenden Eigenschaften der jeweiligen Komponente abzurufen. Es handelt sich um eine indirekte Gewinnung der Angaben über die Eigenschaften der Komponenten. Die Datenbank kann dabei entweder direkt an der Windenergieanlage vorhanden sein oder es wird über ein Datenfernübertragungsnetz auf eine zentrale Datenbank z. B. der Herstellers der Steuerungseinheit zugegriffen, um die gewünschten Daten über die Eigenschaften einzelner Komponenten abzurufen. Sofern eine lokale Datenbank vorgesehen ist, ist es besonders bevorzugt, wenn diese über ein Datenfernübertragungsnetz in regelmäßigen Abständen, zumindest jedoch, bei Veränderung der Konfiguration der Windenergieanlage z. B. durch Austausch einer Komponente, aktualisiert wird. Werden Daten über die Eigenschaften mehrerer Komponenten aus einer Datenbank abgerufen, ist es möglich, dass die abgerufenen Daten Informationen über die Wechselwirkung zwischen den installierten Komponenten enthalten oder zumindest in diesen berücksichtigt sind. Es ist möglich, dass die Datenbank die Eigenschaften der Komponenten in Form von Parametrisierungsdaten bereitstellt.

Es ist auch möglich, dass die Identifikationsdaten direkt Angaben über Eigenschaften der Komponenten enthalten, d. h. es findet eine direkte Gewinnung der Angaben über die Eigenschaften von Komponenten statt. So können beispielsweise neben oder anstelle der Typenkennung eines Transformators die Ein- und Ausgangsspannung desselben in den Identifikationsdaten enthalten sein. Die in den Identifikationsdaten enthaltenen Angaben über Eigenschaften der Komponenten müssen nicht vollständig sein. Sie können vielmehr auf die notwendigen Eigenschaften begrenzt sein; die weiteren Eigenschaften können dann bspw. anhand einer Typenkennung aus einer Datenbank - wie oben beschrieben - abgerufen werden. Hierbei handelt es sich also um eine Kombination der direkten und indirekten Gewinnung der Angaben über die Eigenschaften von Komponenten.

Es ist auch möglich, dass die Identifikationsdaten eindeutige Seriennummern enthalten. In Verbindung mit einer - vorzugsweise zentralen - Datenbank ist es möglich, die Angaben über Eigenschaften genau der vorliegenden Komponente zu ermitteln. Dies ist besonders vorteilhaft für Komponenten, deren konkreten technischen Eigenschaften während der Herstellung exakt ermittelt werden. Die Steuerungseinheit wird so über die Parametrisierungsdaten in die Lage versetzt, solche Komponenten möglichst nahe an ihrem tatsächlichen - und nicht nur ihrem theoretischen - optimalen Arbeitspunkt zu betreiben.

Sofern eine Komponente nicht oder ein Fehler aufgrund falscher Parametrisierung erkannt wird, ist es bevorzugt, wenn eine Warnmeldung ausgegeben wird und/oder ein Start der Windenergieanlage verhindert wird bzw. sie heruntergefahren wird. Die Warnmeldung kann beispielsweise in Form von akustischen Signalen direkt an der Windenergieanlage oder über ein Datenfernübertragungsnetz an eine zentrale Überwachungseinheit ausgegeben werden. Durch Stillsetzen der Windenergieanlage wird die Gefahr von Schädigungen der gesamten Windenergieanlage oder zumindest einzelner Komponenten stark minimiert.

Sofern durch die Parametrisierungseinheit eine Änderung bei den Identifikationsdaten einzelnen Komponenten z.B. vom Austausch beschädigter Komponenten oder durch die Steuerungseinheit eine Änderung der Parametrisierungsdaten festgestellt wird, ist es bevorzugt, wenn ein Authentifizierungsschlüssel abgefragt wird. Wird kein oder ein ungültiger Authentifizierungsschlüssel eingegeben, wird ein Start der Windenergieanlage verhindert. Dies bietet den Vorteil, dass nur geeignetes Fachpersonal, welches über den benötigten Authentifizierungsschlüssel verfügt, die Windenergieanlage beispielsweise nach dem Austausch einer Komponente wieder in Betrieb setzen kann. Einem unsachgemäßen Austausch einzelner Komponenten durch unqualifizierte Personen wird dadurch entgegengewirkt.

Zur Erläuterung des erfindungsgemäßen Verfahrens wird auf die vorstehenden Ausführungen zu der erfindungsgemäßen Vorrichtung verwiesen.

Die Erfindung wird nun anhand eines in den Zeichnungen dargestellten Ausführungsbeispiels näher erläutert. Es zeigen:
- Fig. 1:: ein Ausführungsbeispiel einer erfindungsgemäßen Windenergieanlage; und
- Fig. 2:: die Gondel der Windenergieanlage aus Fig. 1.

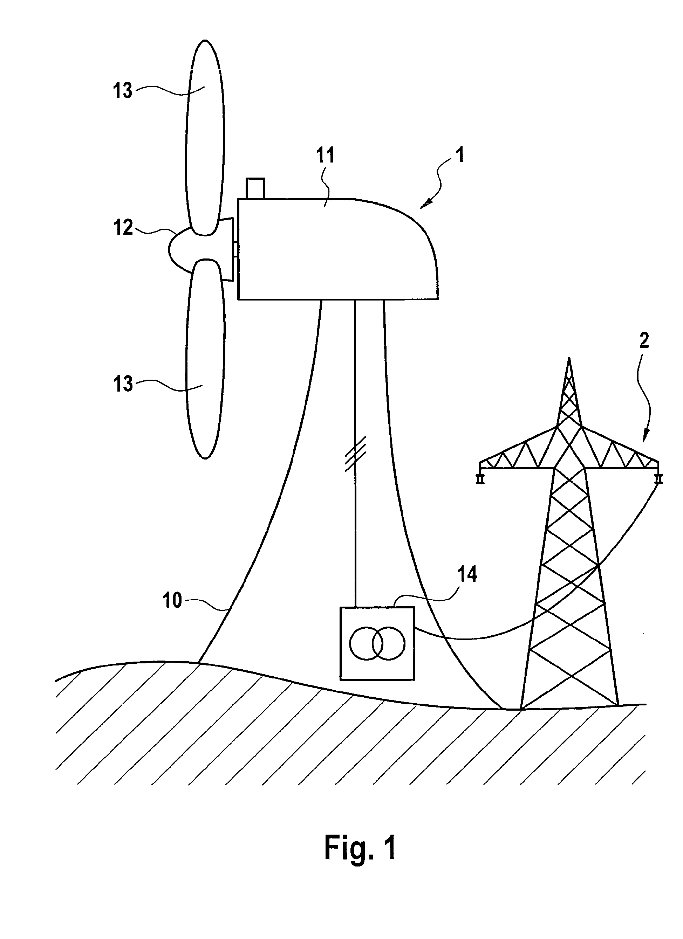

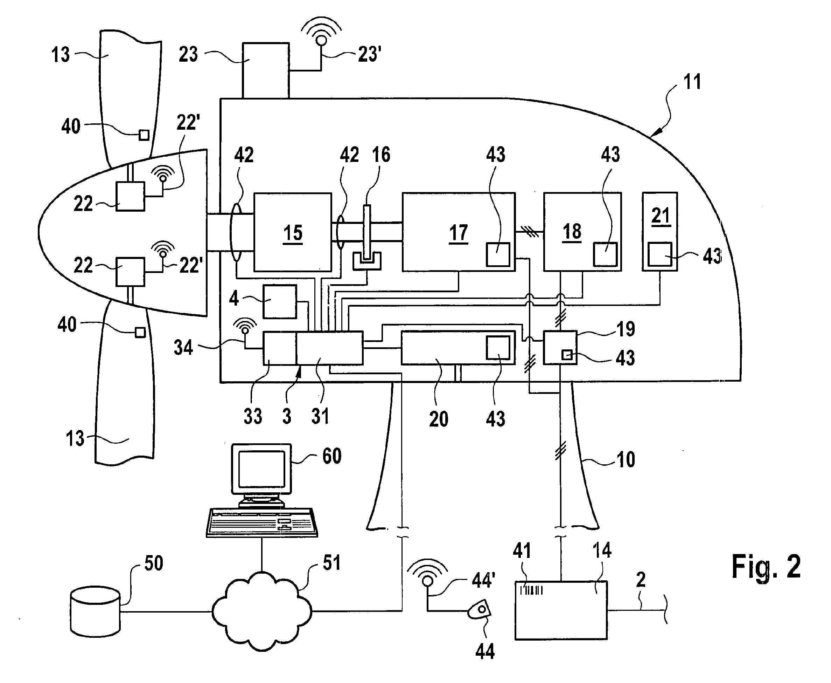

Die in Fig. 1 in einer Übersicht dargestellte Windenergieanlage 1 umfasst eine auf einem Turm 10 schwenkbar angeordnete Gondel 11, an der drehbar ein Windrotor angeordnet ist. Er umfasst die Rotornabe 12, die aufgrund von Windeinwirkung auf die daran befestigten Rotorblätter 13 in Rotation versetzt werden kann. Im Inneren der Gondel, auf welche später in Bezug auf Fig. 2 noch dezidiert eingegangen wird, wird die mechanische Energie des Rotors in elektrische Energie umgewandelt. Die elektrische Energie wird in Form von Dreiphasenstrom über entsprechende Leitungen zu einem Transformator 14 am Fuße des Turms 10 der Windenergieanlage 1 geleitet. Im Transformator 14 findet eine Spannungsanpassung statt, so dass die elektrische Energie in ein Hochspannungsnetz 2 oder ein windparkinternes Mittelspannungsnetz eingespeist werden kann.

In Fig. 2 ist eine schematische Darstellung der Komponenten der Windenergieanlage 1, insbesondere der Komponenten innerhalb der Gondel 11 und der Rotornabe 12, dargestellt.

Die Rotorblätter 13 sind drehbar an der Rotornabe 12 befestigt. Über einen Pitch-Verstellantrieb 22 kann der Anstellwinkel der Rotorblätter 13 verändert werden. Die Rotation der Rotornabe 12 wird über eine Welle in ein Getriebe 15 übertragen, dessen Übersetzungsverhältnis so gewählt ist, dass - sofern an der Eingangswelle (von der Rotornabe 12 her) eine typische Rotationsgeschwindigkeit anliegt - an der Ausgangswelle eine für den Generator 17 in Bezug auf den Wirkungsgrad besonders vorteilhafte Umdrehungsgeschwindigkeit vorliegt.

Auf der Achse zwischen Getriebe 15 und Generator 17 ist ein Bremssystem 16 vorgesehen. Dieses kann bei Überschreiten einer Maximaldrehzahl die Antriebsgeschwindigkeit des Generators 17 reduzieren. Um im Zweifelsfall übermäßige Belastung des Getriebes 15 zu vermeiden, kann das Bremssystem 16 auch eine Kupplung umfassen, mit der der Generator 17 vom Getriebe 15 mechanisch getrennt werden kann.

Im Generator 17 wird die mechanische Energie in elektrische Energie umgewandelt. Der Generator 17 kann dabei einfachen Wechselstrom oder Dreiphasenstrom erzeugen. Im Umricher 18 wird der vom Generator 17 erzeugte Strom so umgewandelt, dass er Phase und Frequenz des Netzes 2, sowie eine gewünschte Spannung aufweist. Der Generator 17 kann dabei als doppelt gespeister Asynchrongenerator ausgeführt sein.

Über ein Schaltelement 19 gelangt der vom Umrichter 18 erzeugte Dreiphasenstrom zum Transformator 14 am Fuße des Turmes 10, wo er auf die Spannung des Netzes 2 hoch transformiert wird.

Des Weiteren ist in der Gondel 11 noch ein Azimutantrieb 20 vorgesehen, mit dessen Hilfe die Gondel 11 gegenüber dem Turm 10 rotiert werden kann. Außerdem ist eine Kühlvorrichtung 21 vorgesehen, die ein Überhitzen des Umrichters 18 und/oder anderer Komponenten in der Gondel 11 verhindern soll. An der Außenseite der Gondel 11 ist eine Wetterstation 23 vorgesehen, mit deren Hilfe zumindest Windgeschwindigkeit und Windstärke im Bereich der Gondel 11 und damit der Rotorblätter 13 gemessen werden kann. Weitere Messungen durch die Messeinrichtung 23 beispielsweise der Temperatur sind ebenfalls denkbar.

In der Gondel 11 ist weiterhin eine Steuerungseinheit 3 vorgesehen. Die Steuerungseinheit 3 umfasst ein an sich bekanntes Steuerungsmodul 31 welches dazu ausgebildet ist, ansteuerbare Komponenten, wie zum Beispiel den Umrichter 18, das Kühlsystem 21, das Schaltelement 19, den Azimutantrieb 20 und die Pitch-Verstellung 22 anzusteuern. Zu diesem Zwecke ist die Steuereinrichtung über Steuerungsleitungen z.B. mit dem Umrichter 18 verbunden. Es ist aber auch möglich, dass die Kommunikation zwischen Steuereinrichtung 3 und einer Komponente drahtlos erfolgt. Dafür ist an der Steuerungseinheit 3 eine Antenne 34 vorgesehen, mit der beispielsweise Steuerungsbefehle an die Antenne 22' der Pitch-Verstellantriebe 22 gesendet werden können. Die Steuerungsleitungen bzw. drahtlosen Verbindungen dienen dabei nicht ausschließlich der Übermittlung von Steuerungssignalen, sondern können auch zur Übertragung von Sensordaten dienen. So sendet die Wetterstation 23 die von ihr gemessenen Messwerte über ihre Antenne 23' drahtlos an die Steuerungseinheit 3.

Erfindungsgemäß ist nun eine mit der Steuereinheit 3 verbundenes Parametrisierungseinheit 4 vorgesehen ist. Diese Parametrisierungseinheit 4 ist dazu ausgebildet, Identifikationsdaten einer oder mehrerer Komponenten 10-23 zu sammeln, aus ihnen Angaben über die Eigenschaften der Komponenten 10-23 zu gewinnen und daraus Parametrisierungsdaten zu erzeugen. Die Parametrisierungsdaten können wiederum vom Steuerungsmodul 31 genutzt werden, um die Windenergieanlage 1 so zu steuern, dass alle Komponenten 10-23 möglichst nahe an ihrem optimalen Arbeitspunkt arbeiten bzw. der Gesamtwirkungsgrad der Windenergieanlage 1 maximal ist.

Die Kommunikation der Parametrisierungseinheit 4 mit den Komponenten 10-23 läuft über das Steuerungsmodul 31. Es ist aber auch möglich, dass die Parametrisierungseinheit 4 direkt mit den Komponenten 10-23 kommuniziert. Hierzu sind ggf. gesonderte Leitungsverbindungen zwischen der Parametrisierungseinheit 4 und den Komponenten 10-23 vorzusehen. Die Parametrisierungseinheit 4 kann auch als Modul in der Steuerungseinheit 3 ausgebildet sein.

Der Turm 10 und die Gondel 11 zählen zu den Komponenten 10-23, da ihre Eigenschaften - wie z.B. das Gewicht der Gondelstruktur oder die statische und dynamische Belastbarkeit des Turmes 10 - in die Steuerung der Windenergieanlage 1 mit einfließen können.

Die dafür benötigten Identifikationsdaten können in elektrischen Kodierungen der Komponenten 10-23 enthalten sein. Beispielsweise können sie auf Chips 43 gespeichert sein, die an den jeweiligen Komponenten vorgesehen sind. Bei Komponenten, die bereits aus Steuerungsgründen mit der Steuereinrichtung 3 kabelgebunden - wie z. B. der Umrichter 18 - oder drahtlos - wie z.B. die Messeinrichtung 23 - verbunden sind, kann der bereits existierende Kommunikationspfad zum Sammeln der Identifikationsdaten genutzt werden. Die Parametrisierungseinheit 4 ist also in der Lage, die Identifikationsdaten von elektrisch kodierten Komponenten auszulesen.

Es ist auch möglich, dass solche Komponenten 10-23, die von der Steuereinrichtung 3 normalerweise nicht angesteuert werden können, weswegen zwischen einer solchen Komponente und der Steuerungseinheit 3 kein Kommunikationspfad besteht, elektrisch kodiert sind. Zum Auslesen der Kodierung muss dann ein Kommunikationspfad geschaffen werden. Im dargestellten Ausführungsbeispiel ist hierzu beispielhaft eine Kabelverbindung zwischen der Steuereinrichtung 3 und dem Generator 17 vorgesehen. Es ist auch möglich, den Generator 17 direkt mit der Parametrisierungseinheit 4 zu verbinden.

Die Identifikationsdaten der Rotorblätter 13 sind in an den Rotorblättern 13 befestigten Transpondern 40 gespeichert. Die Identifikationsdaten aus diesen Transpondern 40 können über ein Auslesemodul 33 an der Steuereinheit 3 ausgelesen werden. Zum Auslesen kann das Auslesemodul 33 entweder eigene Kommunikationsmittel bereithalten oder die Antenne 34 der Steuereinheit 3 verwenden. Bei den Transpondern 40 kann es sich beispielsweise um RFID-Chips handeln.

Am Transformator 14 am Fuße des Turms 10 ist ein Barcode 41 vorgesehen, der die Identifikationsdaten dieser Komponente enthält. Der Barcode wird mit Hilfe eines entsprechenden Scanners 44 eingelesen, und über eine drahtlose Verbindung zwischen der Antenne 44' und der Antenne 34 der Steuereinheit an die Parametrisierungseinheit 4 übermittelt.

Sowohl an der Eingangs- als auch an der Ausgangswelle des Getriebes 15 sind Sensoren 42 vorgesehen. Mit Hilfe dieser Sensoren 42 kann die jeweilige Umdrehungsgeschwindigkeit der Wellen festgestellt werden. Die Sensoren 42 sind mit der Steuerungseinheit 3 verbunden, über die die Parametrisierungseinheit 4 in der Lage ist, aus den Daten der Sensoren 42 Eigenschaften des Getriebes 15 zu ermitteln. In diesem Fall kann die Parametrisierungseinheit 4 das Übersetzungsverhältnis des Getriebes 15 bestimmen. Sofern keine weiteren Eigenschaften des Getriebes 15 für den optimalen Betrieb der Windenergieanlage 1 benötigt werden, muss das Getriebe 15 keine weiteren Identifikationsdaten aufweisen. Die relevante Angabe über die Eigenschaft dieser Komponente kann also allein aus Sensordaten ermittelt werden.

Die Identifikationsdaten der einzelnen Komponenten 10-23 können verschiedene Informationen enthalten. So ist es möglich, dass die Identifikationsdaten einer Komponente - wie zum Beispiel dem Schaltelement 19 - bereits alle Angaben über die Eigenschaften dieser Komponente enthalten. In den meisten Fällen werden die Identifikationsdaten jedoch lediglich einen Teil der Angaben über die Eigenschaften der jeweiligen Komponente enthalten. Dafür ist bei solchen Komponenten 10-23, bei denen die Identifikationsdaten nicht alle Angaben über die Eigenschaften enthalten, zumindest eine Typenkennung in den Identifikationsdaten vorgesehen. Sobald das Parametrisierungseinheit 4 über eine Typenkennung verfügt, kann es die zu der Typenkennung gehörigen Angaben über Eigenschaften aus einer Datenbank 50 abrufen.

Im dargestellten Ausführungsbeispiel ist die Parametrisierungseinheit 4 über die Steuerungseinheit 3 und das Internet 51 mit einer entsprechenden Datenbank 50 verbunden, die z. B. beim Hersteller der Parametrisierungseinheit 4 angeordnet ist. Die Datenbank 50 kann selbstverständlich auch direkt an der Windenergieanlage 1 angeordnet sein. In diesem Fall lässt sie sich aber vorzugsweise über ein Datenfernübertragungsnetz, z. B. dem Internet 51, aktualisieren.

Die Identifikationsdaten einiger Komponenten 10-23 können darüber hinaus noch eindeutige Seriennummern der dazugehörigen Komponente enthalten. Mit Hilfe dieser Seriennummer lassen sich komponentenspezifische Daten aus der Datenbank 50 abrufen. Darüber hinaus ist es möglich, die Echtheit der einzelnen Komponenten 10-23 zu überprüfen. Dadurch kann Produktpiraterie erschwert werden.

Werden der Parametrisierungseinheit 4 Identifikationsdaten zugespielt, die es nicht verarbeiten kann, die eine unzulässige Typenkennzeichnung oder eine gesperrte Seriennummer enthalten, so veranlasst die Parametrisierungseinheit 4 das Steuerungsmodul 31, einen Start der Windenergieanlage 1 zu verhindern. Die Rotorblätter 13 werden dazu über die Pitch-Verstelleinrichtung 22 in eine Fahnenstellung gebracht, d.h. die Rotornabe 12 wird nicht weiter angetrieben. Optional kann auch ein Stillsetzen des Generators 17 durch das Bremssystem 16 veranlasst werden. Zusätzlich wird an einem über das Internet 51 mit der Steuerungseinheit 3 verbundener Computer 60 eine Warnmeldung ausgegeben.

Verändern sich beispielsweise aufgrund von Austausch die Identifikationsdaten einer Komponente, so wird diese vom Parametrisierungseinheit 4 festgestellt. Das Parametrisierungseinheit 4 erfragt dann über den Computer 60 oder eine direkt an der Windenergieanlage 1 vorhandene Ein/AusgabeEinheit nach einem Authentifizierungsschlüssel. Wird dieser Authentifizierungsschlüssel nicht oder falsch eingegeben, so verhindert die Parametrisierungseinheit 4 über das Steuerungsmodul 31 einen Start der Windenergieanlage 1. Indem jede Änderung an den Identifikationsdaten und damit den Parametrisierungsdaten über ein Authentifikationsschlüssel verifiziert werden muss, wird ausgeschlossen, dass unqualifizierte Personen (d.h. Leute ohne den Authentifizierungsschlüssel) Komponenten 10-23 der Windenergieanlage 1 austauschen.

Anstelle von separaten Leitungen zwischen der Steuerungseinheit 3 bzw. der Parametrisierungseinheit 4 und einzelnen Komponenten 10-23 kann auch ein Bus-System vorgesehen sein. Die Steuerungseinheit 3 bzw. die Parametrisierungseinheit 4 kommuniziert dann über ein Datenkabel mit allen daran angeschlossenen Komponenten 10-23.

## Patentansprüche

1. Windenergieanlage umfassend mechanische und elektrische Komponenten (10-23) und eine zentrale Steuerungseinheit (3), mit der wenigstens ein Teil der Komponenten (10-23) der Windenergieanlage (1) verbunden und durch sie angesteuert werden kann,
**dadurch gekennzeichnet, dass**
die Steuerungseinheit (3) ein Steuerungsmodul (31) umfasst und eine Parametrisierungseinheit (4) vorgesehen ist, wobei das Parametrisierungseinheit (4) dazu ausgebildet ist, von einer oder mehrerer verbauter Komponenten (10-23) Identifikationsdaten zu erhalten, aus den Identifikationsdaten Angaben über die Eigenschaften der Komponenten (10-23) zu gewinnen und aus den Angaben über die Eigenschaften Parametrisierungsdaten zu erzeugen, und wobei das Steuerungsmodul (31) dazu ausgebildet ist, die Steuerung der ansteuerbaren Komponenten (10-23) an die Parametrisierungsdaten anzupassen.

2. Windenergieanlage nach Anspruch 1,
**dadurch gekennzeichnet, dass**
die Komponenten (10-23) elektrisch kodiert sind, die Kodierungen Identifikationsdaten enthalten und das Parametrisierungseinheit (4) dazu ausgebildet ist, die Kodierungen der kodierten Komponenten auszulesen.

3. Windenergieanlage nach Anspruch 1,
**dadurch gekennzeichnet, dass**
an den Komponenten (10-23) elektrische Transponder (40) und/oder Barcodes (41) angebracht sind, die die Identifikationsdaten der Komponenten (10-23) enthalten und ein mit der Steuerungseinheit (3) oder der Parametrisierungseinheit (4) verbundenes Auslesemodul (33) zur Auslesung der Identifikationsdaten und deren Übermittlung an die Parametrisierungseinheit (4) vorgesehen ist.

4. Windenergienlage nach Anspruch 1,
**dadurch gekennzeichnet, dass**
ein oder mehrere Sensoren (42) vorgesehen sind und die Parametrisierungseinheit (4) dazu ausgebildet ist, anhand von Messwerten der Sensoren (42) Eigenschaften der Komponenten (10-23) zu ermitteln.

5. Windenergieanlage nach Anspruch 4,
**dadurch gekennzeichnet, dass**
eine Eingabe/Ausgabe-Vorrichtung zur Verifizierung der ermittelten Eigenschaften vorgesehen ist.

6. Windenergieanlage nach Anspruch 1,
**dadurch gekennzeichnet, dass**
die Alternativen zum Sammeln von Identifikationsdaten gemäß Ansprüchen 2 und/oder 3 und/oder zur Ermittlung von Eigenschaften einzelner Komponenten gemäß Ansprüchen 4 und/oder 5 miteinander kombiniert sind.

7. Windenergieanlage nach einem der Ansprüche 1 bis 6,
**dadurch gekennzeichnet, dass**
eine Datenbank (50) vorgesehen ist, die Identifikationsdaten der Komponenten (10-23) Typenkennungen enthalten und die Parametrisierungseinheit (4) dazu ausgebildet ist, aus der mit der Parametrisierungseinheit (4) verbundenen Datenbank (50) Angaben über die Eigenschaften der Komponenten (10-23) anhand ihrer Typenkennung zu ermitteln.

8. Verfahren zur Parametrisierung einer durch eine zentrale Steuerungseinheit (3) gesteuerten Windenergieanlage (1) mit mechanischen und elektrischen Komponenten (10-23), **gekennzeichnet durch** die folgenden Schritte:
a) Sammeln von Identifikationsdaten einer oder mehrerer verbauter Komponenten (10-23);
b) automatisierte Gewinnung von Angaben über die Eigenschaften der Komponenten (10-23) aus den Identifikationsdaten;
c) Erzeugung von Parametrisierungsdaten aus den Angaben über die Eigenschaften der Komponenten (10-23); und
d) Anpassen der Steuerung der Windenergieanlage (1) an die Parametrisierungsdaten.

9. Verfahren nach Anspruch 8,
**dadurch gekennzeichnet, dass**
die Komponenten (10-23) elektrisch durch einen Barcode (41) und/oder einen Transponder (40) kodiert sind, wobei die Kodierungen Identifikationsdaten enthalten, und die Kodierungen der kodierten Komponenten (10-23) ausgelesen werden.

10. Verfahren nach Anspruch 8,
**dadurch gekennzeichnet, dass**
Messwerte von wenigstens einem Sensor (42) abgerufen werden und aus den Messwerten wenigstens teilweise die Angaben über Eigenschaften der Komponenten (10-23) ermittelt werden.

11. Verfahren nach einem der Ansprüche 8 bis 10,
**dadurch gekennzeichnet, dass**
die Identifikationsdaten der Komponenten (10-23) Typenkennungen enthalten und aus einer Datenbank (50) Angaben über Eigenschaften der Komponenten (10-23) abgerufen werden.

12. Verfahren nach einem der Ansprüche 8 bis 11,
**dadurch gekennzeichnet, dass**
die Identifikationsdaten der Komponenten (10-23) Angaben über Eigenschaften der Komponenten (10-23) enthalten.

13. Verfahren nach einem der Ansprüche 8 bis 12,
**dadurch gekennzeichnet, dass**
die Identifikationsdaten der Komponenten (10-23) eindeutige Seriennummern enthalten.

14. Verfahren nach einem der Ansprüche 8 bis 13,
**dadurch gekennzeichnet, dass**
bei Nichterkennung einer Komponente (10-23) eine Warnmeldung ausgegeben wird und/oder einen Start der Windenergieanlage (1) verhindert wird.

15. Verfahren nach einem der Ansprüche 8 bis 14,
**dadurch gekennzeichnet, dass**
bei Änderung der Parametrisierungsdaten ein Authentifizierungsschlüssel abgefragt wird und bei Ungültigkeit des Authentifizierungsschlüssels ein Start der Windenergieanlage (1) verhindert wird.

## Claims

1. Wind energy installation comprising mechanical and electrical components (10-23) and a central control unit (3), to which at least some of the components (10-23) of the wind energy installation (1) can be connected and by means of which they can be controlled,
**characterized in that**
the control unit (3) comprises a control module (31), and a parameterization unit (4) is provided, the parameterization unit (4) being designed to obtain identification data from one or more installed components (10-23), to obtain details of the properties of the components (10-23) from the identification data and to generate parameterization data from the details of the properties, and the control module (31) being designed to adapt the control of the controllable components (10-23) to the parameterization data.

2. Wind energy installation according to Claim 1,
**characterized in that**
the components (10-23) are electrically coded, the codings contain identification data, and the parameterization unit (4) is designed to read the codings of the coded components.

3. Wind energy installation according to Claim 1,
**characterized in that**
electrical transponders (40) and/or barcodes (41) which contain the identification data relating to the components (10-23) are fitted to the components (10-23), and a reading module (33) which is connected to the control unit (3) or to the parameterization unit (4) is provided for the purpose of reading the identification data and transmitting them to the parameterization unit (4).

4. Wind energy installation according to Claim 1,
**characterized in that**
one or more sensors (42) are provided, and the parameterization unit (4) is designed to determine properties of the components (10-23) using measured values from the sensors (42).

5. Wind energy installation according to Claim 4,
**characterized in that**
an input/output apparatus is provided for the purpose of verifying the determined properties.

6. Wind energy installation according to Claim 1,
**characterized in that**
the alternatives for collecting identification data according to Claim(s) 2 and/or 3 and/or for determining properties of individual components according to Claim(s) 4 and/or 5 are combined with one another.

7. Wind energy installation according to one of Claims 1 to 6,
**characterized in that**
a database (50) is provided, the identification data relating to the components (10-23) contain type identifiers, and the parameterization unit (4) is designed to determine details of the properties of the components (10-23) from the database (50), which is connected to the parameterization unit (4), using the type identifier of the components.

8. Method for parameterizing a wind energy installation (1) which is controlled by a central control unit (3) and has mechanical and electrical components (10-23), **characterized by** the following steps of:
a) collecting identification data relating to one or more installed components (10-23);
b) automatically obtaining details of the properties of the components (10-23) from the identification data;
c) generating parameterization data from the details of the properties of the components (10-23); and
d) adapting the control of the wind energy installation (1) to the parameterization data.

9. Method according to Claim 8,
**characterized in that**
the components (10-23) are electrically coded by means of a barcode (41) and/or a transponder (40), the codings containing identification data and the codings of the coded components (10-23) being read.

10. Method according to Claim 8,
**characterized in that**
measured values are retrieved from at least one sensor (42), and the details of properties of the components (10-23) are at least partially determined from the measured values.

11. Method according to one of Claims 8 to 10,
**characterized in that**
the identification data relating to the components (10-23) contain type identifiers, and details of properties of the components (10-23) are retrieved from a database (50).

12. Method according to one of Claims 8 to 11,
**characterized in that**
the identification data relating to the components (10-23) contain details of properties of the components (10-23).

13. Method according to one of Claims 8 to 12,
**characterized in that**
the identification data relating to the components (10-23) contain unique serial numbers.

14. Method according to one of Claims 8 to 13,
**characterized in that**
if a component (10-23) is not recognized, a warning message is output and/or the wind energy installation (1) is prevented from being started.

15. Method according to one of Claims 8 to 14,
**characterized in that**
if the parameterization data are changed, an authentication key is requested and the wind energy installation (1) is prevented from being started if the authentication key is invalid.

## Revendications

1. Éolienne, comportant des composants (10-23) mécaniques et électriques et une unité de commande (3) centrale, à laquelle est reliée au moins une partie des composants (10-23) de l'éolienne (1) et par laquelle ceux-ci sont activés,
**caractérisée en ce que**
l'unité de commande (3) comporte un module de commande (31), et une unité de paramétrage (4) est prévue, ladite unité de paramétrage (4) étant configurée pour recevoir des données d'identification d'un ou de plusieurs composants (10-23) installés, pour obtenir des indications sur les propriétés des composants (10-23) à partir des données d'identification et pour générer des données de paramétrage à partir des indications sur les propriétés, et le module de commande (31) étant configuré pour ajuster aux données de paramétrage la commande des composants (10-23) activables.

2. Éolienne selon la revendication 1, **caractérisée en ce que** les composants (10-23) sont codés électriquement, les codages contiennent des données d'identification et l'unité de paramétrage (4) est configurée pour lire les codages des composants codés.

3. Éolienne selon la revendication 1, **caractérisée en ce que** sur les composants (10-23) sont disposés des transpondeurs (40) électriques et/ou des codes-barres (41), qui contiennent les données d'identification des composants (10-23), et il est prévu un module de lecture (33), qui est relié à l'unité de commande (3) ou à l'unité de paramétrage (4) et qui est destiné à lire les données d'identification et à les transmettre à l'unité de paramétrage (4).

4. Éolienne selon la revendication 1, **caractérisée en ce qu'**il est prévu un ou plusieurs capteurs (42), et l'unité de paramétrage (4) est configurée pour déterminer, à l'appui des valeurs de mesure des capteurs (42), des propriétés des composants (10-23).

5. Éolienne selon la revendication 4, **caractérisée en ce qu'**il est prévu un dispositif d'entrée/sortie pour vérifier les propriétés déterminées.

6. Éolienne selon la revendication 1, **caractérisée en ce que** les alternatives destinées à collecter les données d'identification selon les revendications 2 et/ou 3 et/ou destinées à déterminer les propriétés des différents composants selon les revendications 4 et/ou 5 sont combinées entre elles.

7. Éolienne selon l'une quelconque des revendications 1 à 6, **caractérisée en ce qu'**il est prévu une base de données (50), les données d'identification des composants (10-23) contiennent des identificateurs de type et l'unité de paramétrage (4) est configurée pour déterminer, à partir de la base de données (50), reliée à l'unité de paramétrage (4), des indications sur les propriétés des composants (10-23) à l'appui de leur identificateur de type.

8. Procédé permettant le paramétrage d'une éolienne (1), commandée par une unité de commande (3) centrale et comportant des composants (10-23) mécaniques et électriques, **caractérisé par** les étapes suivantes:
a) collecte des données d'identification d'un ou de plusieurs composants (10-23) installés;
b) obtention automatisée d'indications sur les propriétés des composants (10-23) à partir des données d'identification;
c) création de données de paramétrage à partir des indications sur les propriétés des composants (10-23) ;et
d) ajustement de la commande de l'éolienne (1) aux données de paramétrage.

9. Procédé selon la revendication 8, **caractérisé en ce que** les composants (10-23) sont codés électriquement par un code-barres (41) et/ou un transpondeur (40), les codages contenant des données d'identification, et les codages des composants (10-23) codés étant lus.

10. Procédé selon la revendication 8, **caractérisé en ce que** des valeurs de mesure d'au moins un capteur (42) sont extraites et à partir des valeurs de mesure sont déterminées au moins en partie les indications sur les propriétés des composants (10-23).

11. Procédé selon l'une quelconque des revendications 8 à 10, **caractérisé en ce que** les données d'identification des composants (10-23) contiennent des identificateurs de type, et des indications sur les propriétés des composants (10-23) sont extraites d'une base de données (50).

12. Procédé selon l'une quelconque des revendications 8 à 11, **caractérisé en ce que** les données d'identification des composants (10-23) contiennent des indications sur les propriétés des composants (10-23).

13. Procédé selon l'une quelconque des revendications 8 à 12, **caractérisé en ce que** les données d'identification des composants (10-23) contiennent des numéros de série univalents.

14. Procédé selon l'une quelconque des revendications 8 à 13, **caractérisé en ce que**, en cas de non-reconnaissance d'un composant (10-23), une alarme est émise et/ou un démarrage de l'éolienne (1) est empêché.

15. Procédé selon l'une quelconque des revendications 8 à 14, **caractérisé en ce que**, en cas de variation des données de paramétrage, une clé d'authentification est interrogée et si ladite clé d'authentification n'est pas valide, un démarrage de l'éolienne (1) est empêché.
